# EUROPEAN PATENT APPLICATION

(11) **EP 4 521 835 A1**
(43) Date of publication of application: **12.03.2025**
(21) Application number: 23829897.0
(22) Date of filing: 08.06.2023
(51) Int. Cl.: H04W 72/04, H04W 72/12

(54) **INFORMATION SENDING METHOD, AND COMMUNICATION NODE AND STORAGE MEDIUM**

(30) Priority: 30.06.2022 CN 202210772495
(71) Applicant: ZTE Corporation, Shenzhen, Guangdong 518057 (CN)
(72) Inventor: CHEN, Jie, Shenzhen, Guangdong 518057 (CN); LU, Youxiong, Shenzhen, Guangdong 518057 (CN); HE, Haigang, Shenzhen, Guangdong 518057 (CN); XING, Weimin, Shenzhen, Guangdong 518057 (CN); MIAO, Ting, Shenzhen, Guangdong 518057 (CN)
(74) Representative: Aipex B.V.
(86) International application number: PCT/CN2023/099105
(87) International publication number: WO 2024/001713

(57) **Abstract**

Provided are an information sending method, a communication node, and a storage medium. The information sending method includes the following: A position of the preset resource in each resource block set (RB set) of a resource pool is configured, the position of the preset resource includes a frequency domain resource position of first information, and the first information includes at least one of an occupied signal or an occupied channel (S110). A first resource is determined, and the first resource includes candidate time domain resources and candidate RB sets that are used for sending the first information (S 120). A second resource is determined according to the first resource, and the first information is sent at a position of the preset resource of the second resource (S130).

## Description

### TECHNICAL FIELD

The present application relates to the field of communication technology, for example, an information sending method, a communication node, and a storage medium.

### BACKGROUND

Before sending data on the unlicensed spectrum, a 3rd Generation Partnership Project (3GPP) system device first needs to perform channel listening for a certain period of time according to the service priority and then can continue to send the data only when it is determined that the channel is in an idle state. If a base station successfully accesses the channel in a channel access mode of type1, it can be considered that the base station initializes a channel occupancy time (COT). In the COT, the base station and the user equipment (UE) scheduled by the base station can occupy the channel continuously. If the UE successfully accesses the channel in the channel access mode of type1, it can be considered that the UE initializes a COT, and the UE and the base station that schedules the UE can continuously occupy the channel in the COT. Therefore, in a 3GPPNew Radio in unlicensed spectrum (NR-U) system, after successfully initializing a COT, either the base station or the UE can continuously occupy the channel in the COT through scheduling to avoid channel loss. In the 3GPP Release 18 (also referred to as R18), the sidelinkunlicensed (SL-U) system supports a shared channel between UE and UE. However, in some scenarios, the SL-U system is a distributed scheduling system. When one UE successfully initializes a COT and another UE needs to share the COT, how to ensure the continuous occupation of the channel in the COT is an urgent problem to be solved.

### SUMMARY

Embodiments of the present application provide an information sending method. The method is applied to a first communication node and includes the following:

A position of a preset resource in each resource block set (RB set) of a resource pool is configured, the position of the preset resource includes a frequency domain resource position of first information, and the first information includes at least one of an occupied signal or an occupied channel. A first resource is determined, and the first resource includes candidate time domain resources and candidate RB sets that are used for sending the first information. A second resource is determined according to the first resource, and the first information is sent at a position of the preset resource of the second resource.

Embodiments of the present application provide a communication node. The communication node includes a processor that, when executing a computer program, implements the information sending method of any of the preceding embodiments.

Embodiments of the present application also provide a computer-readable storage medium storing a computer program that, when executed by a processor, implements the information sending method of any of the preceding embodiments.

### BRIEF DESCRIPTION OF DRAWINGS

FIG. 1 is a diagram illustrating that a base station initializes a COT.
FIG. 2 is a diagram illustrating that UE initializes a COT.
FIG. 3 is a diagram illustrating the networking of a wireless communication system according to an embodiment.
FIG. 4 is a diagram of an SL communication resource pool according to an embodiment.
FIG. 5 is a diagram illustrating the structure of an SL logical slot according to an embodiment.
FIG. 6 is a diagram illustrating the other structure of the SL logical slot according to an embodiment.
FIG. 7 is a flowchart of an information sending method according to an embodiment.
FIG. 8 is a diagram of a position of the preset resource in each RB set of a resource pool according to an embodiment.
FIG. 9 is a diagram of a first resource according to an embodiment.
FIG. 10 is a diagram of a time domain resource result according to an embodiment.
FIG. 11 is a diagram of another time domain resource result according to an embodiment.
FIG. 12 is a diagram of another time domain resource result according to an embodiment.
FIG. 13 is a diagram of another time domain resource result according to an embodiment.
FIG. 14 is a diagram illustrating the structure of an information sending apparatus according to an embodiment.
FIG. 15 is a diagram illustrating the structure of a UE according to an embodiment.

### DETAILED DESCRIPTION

The embodiments described herein are intended to explain the present application and not to limit the present application. Embodiments of the present application are described hereinafter in detail in conjunction with drawings.

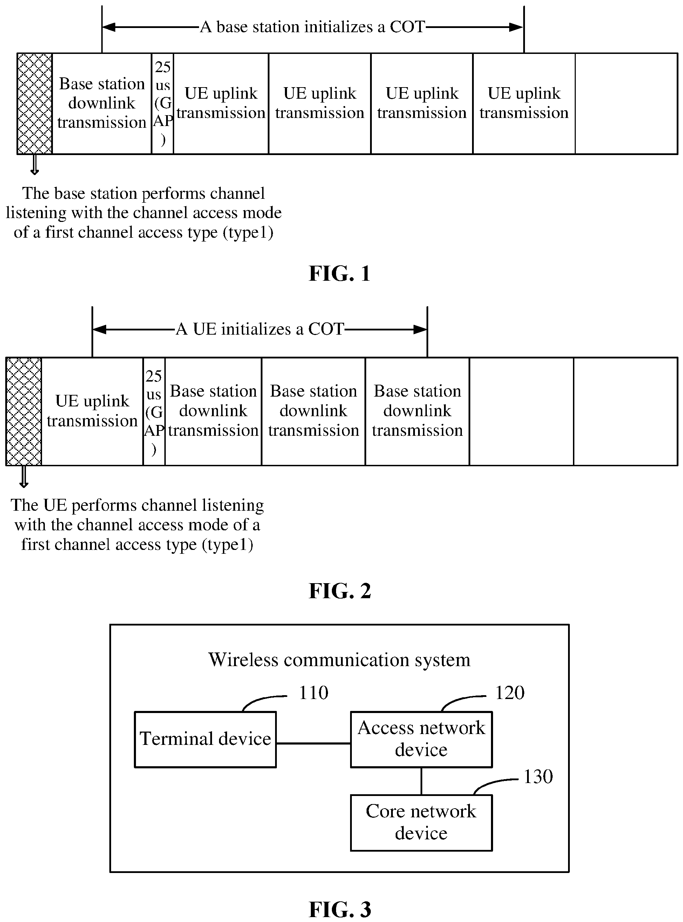

In the unlicensed spectrum, non-3GPP system devices (such as Bluetooth and Wi-Fi) may exist. When 3GPP system devices need to work in the unlicensed spectrum, interference avoidance technology is required for coexistence fairly with other systems. NR-U standardizes some behaviors of base stations and UEs when channels are assessed. For example, the base stations or the UEs may perform, according to the service priority, channel listening before data sending using the channel access mode of type 1. FIG. 1 is a diagram illustrating that a base station initializes a COT. The base station is used as an example, after the base station successfully accesses the channel, it is considered that the base station initializes (also understood as successfully starts) a COT. The COT has a maximum time limit, in the COT, the base station and the UE scheduled by the base station may use the channel access mode of type 2 with a higher probability of successful access to access the channel. Similarly, FIG. 2 is a diagram illustrating that UE initializes a COT. The UE is used as an example, after the UE successfully accesses the channel, it is considered that the UE initializes a COT. In the COT, the UE and the base station that schedules the UE may use the channel access mode of type 2 with a higher probability of successful access to access the channel.

Accessing a channel using the channel access mode of type 2 in a COT requires compliance with some restrictions of COT sharing. For example, when the GAP between the data sent by a device and the previous data transmission (which may also be understood as the GAP between two adjacent data transmissions) is 25 *us,* the device may use the channel access mode of type 2A to access the channel in the COT; when the GAP between the data sent by the device and the previous data transmission is 16 *us,* the device may use the channel access mode of type 2B to access the channel in the COT; when the GAP between the data sent by the device and the previous data transmission is less than 16 *us,* the device may use the channel access mode of type 2C to access the channel in the COT; when the GAP between the data sent by the device and the previous data transmission is greater than 25 *us,* it is generally believed that the current COT may be lost, that is, the channel is about to be preempted by other non-3GPP system devices.

The sidelink (SL) system may operate in a centralized scheduling mode (mode1) or in a distributed scheduling mode (mode2). In the distributed scheduling mode, no centralized control node such as a base station exists, and each UE determines its own time-frequency resources of data. When an SL-U device operates in the unlicensed spectrum and in the mode2, the GAP of transmissions between UEs is uncontrollable. Therefore, after a UE initializes a COT, in the COT, when the GAP between the transmissions of other UEs or the GAP between the transmissions of other UEs and the UE performing the initialization is greater than 25 *us,* the channel in the COT may be lost, making other UEs unable to continue to share the COT.

The information sending method according to the present application may be applied to various types of wireless communication systems, such as a Long-Term Evolution (LTE) system, a 4th-generation mobile communication technology (4G) system, a 5th-generation mobile communication technology (5G) system, an LTE and 5G hybrid architecture system, a 5G NR system, and a new communication system emerging in future communication development, for example, a 6th-generation mobile communication technology (6G) system. The information sending method is particularly suitable for the SL-U system. FIG. 3 is a diagram illustrating the networking of a wireless communication system according to an embodiment. As shown in FIG. 3, the wireless communication system includes a terminal device 110, an access network device 120, and a core network device 130.

The terminal device 110 may be a device having radio transceiving functions. The device may be deployed on land (such as being indoor or outdoor, handled, wearable, or vehicle-mounted); may be deployed on water (such as in ships); and may also be deployed in the air (such as in airplanes, balloons, and satellites). Examples of some terminal devices 110 are as follows: UE, a mobile phone, a mobile station, a tablet computer, a notebook computer, an ultra-mobile personal computer (UMPC), a handheld computer, a netbook, a personal digital assistant (PDA), and other user equipment that can be networked; a virtual reality (VR) terminal, an augmented reality (AR) terminal, a wireless terminal in industrial control, a wireless terminal in self-driving, a wireless terminal in remote medical, a wireless terminal in a smart grid, a wireless terminal in transportation safety, a wireless terminal in a smart city, and a wireless terminal in a smart home; an IoT node in the Internet of Things (IoT); an in-vehicle communication apparatus in the Internet of Vehicles; an entertainment and game device or system; or a global positioning system device. The embodiments of the present application do not limit the technology and the device configuration used by the terminal device 110. Additionally, the terminal device 110 may be referred to as a terminal.

The access network device 120 is an access device through which the terminal device 110 wirelessly accesses the wireless communication system and may be a base station, an evolved base station (evolved NodeB, eNB, or eNodeB) in Long-Term Evolution Advanced (LTE-Advanced), a transmission reception point (TRP), a base station or gNB in the 5G mobile communication system, a base station in a future mobile communication system, or an access node in a Wireless Fidelity (WiFi) system. The base station may include various network side devices such as a macro base station, a micro base station, a Home Node B, a radio remote, a router, a Wi-Fi device, or a primary cell and a secondary cell, and location management function (LMF) devices. The access network device 120 may also be a module or unit that performs part of functions of the base station, for example, a central unit (CU) or a distributed unit (DU). The embodiments of the present application do not limit the technology and the device configuration used by the access network device 120. Additionally, the access network device 120 may be referred to as a base station.

The core network device 130 may include an access and mobility management network element and a session management network element. Illustratively, the terminal device 110 may access the core network through the access network device 120, thereby enabling data transmission.

In the embodiments of the present application, an information sending method, a communication node, and a storage medium that can run in the preceding wireless communication systems are provided. With this provision, it is ensured that no GAP greater than a slot exits between any transmissions of the UE in an initialized COT, thereby ensuring the continuous occupancy of the channel in the COT.

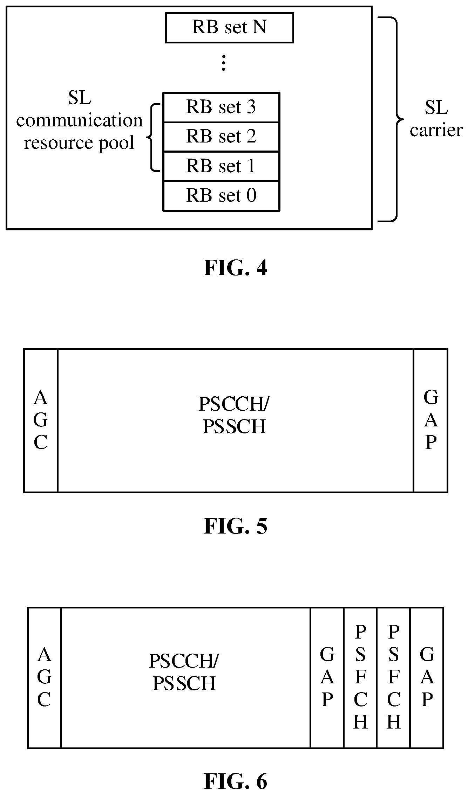

First, the concepts involved in the following embodiments of the present application are explained:
In the embodiments of the present application, the SL UE in the frequency domain may determine the working carrier according to configured information, determine the working bandwidth part (BWP) on the working carrier, and determine a communication resource pool in the BWP. The communication resource pool includes a sending resource pool and a receiving resource pool. Generally, the SL communication resource pool on the unlicensed carrier includes an integer number of resource block sets (RB sets), one RB set refers to a listen before talk (LBT) bandwidth range, and one RB set includes several consecutive resource blocks (RBs). FIG. 4 is a diagram of an SL communication resource pool according to an embodiment. As shown in FIG. 4, the SL carrier includes (N + 1) RB sets, and the SL communication resource pool includes 3 consecutive RB sets, namely, RB set 1, RB set 2, and RB set 3.

In the embodiments of the present application, the SL UE in the time domain determines available slots on the communication resource pool according to the configured information in all physical slots of the working carrier. The available slots are called SL logical slots. An SL logical slot includes a maximum of 14 consecutive symbols. The SL logical slot is divided into two structures. FIG. 5 is a diagram illustrating the structure of an SL logical slot according to an embodiment. FIG. 6 is a diagram illustrating the other structure of the SL logical slot according to an embodiment. One automatic gain control (AGC) symbol occupies one symbol, one empty symbol (GAP symbol) occupies one symbol, and one physical sidelink feedback channel (PSFCH) resource symbol occupies one symbol. As shown in FIG. 5, the SL logical slot does not include a PSFCH symbol, and a physical sidelink control channel (PSCCH) symbol/physical sidelink shared channel (PSSCH) symbol occupies a maximum of 12 symbols. Similarly, as shown in FIG. 6, the SL logical slot includes a PSFCH symbol, and the PSCCH symbol/PSSCH symbol occupies a maximum of nine symbols.

In the embodiments of the present application, the method for configuring a resource position/information may be as follows: The network or base station sends the resource position/information to the UE by signaling, that is, the network or base station configures the resource position/information for the UE; alternatively, other higher-layer entities (such as the higher layer of the UE and other network entities) provide the resource position/information to the UE, that is, other higher-layer entities pre-configure the resource position/information to the UE. In the following embodiments of the present application, configuring resource position/information also includes pre-configuring resource position/information, and later, the higher-layer entity is used to refer to the base station, network, or another higher-layer entity.

The information sending method, communication node, and technical effects thereof are described below.

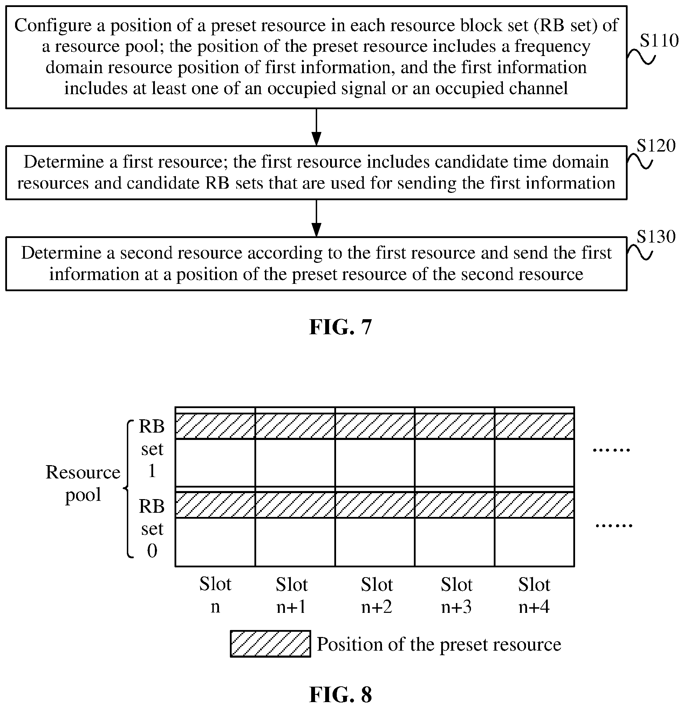

FIG. 7 is a flowchart of an information sending method according to an embodiment. As shown in FIG. 7, the method provided in this embodiment is applicable to a first communication node. In this example, the first communication node (also referred to as the first communication node device or the first node) is the UE that initializes a COT, and the second communication node (also referred to as the second communication node device or the second node) is another UE except the UE that initializes a COT. In the following embodiments, the first communication node is recorded as UE1, and the second communication node is recorded as UE2. The method includes the following operations:
In S110, a position of a preset resource in each resource block set (RB set) of a resource pool is configured, the position of the preset resource includes a frequency domain resource position of first information, and the first information includes at least one of an occupied signal or an occupied channel.

After successfully accessing the channel with the first channel access type (type1), UE1 may send the data of UE1 and send COT shared information (that is, COT-related information) to UE2 so that UE2 determines, according to the received COT shared information, whether to use the COT. If UE2 uses the COT, UE2 first switches from the first channel access type to the second channel access type (type2) with a higher probability of successful access to the channel before sending the data of UE2. However, the premise of switching to the second channel access type is that the gap between transmissions cannot be greater than 25 *us.*

In addition, if UE1 operates in the centralized scheduling mode (mode1), the Uu link is on the authorized spectrum. Therefore, the base station itself does not have channel occupation information on the unlicensed spectrum, and the base station cannot ensure that transmission between the UEs must be continuous in the time domain. If UE1 operates in the distributed scheduling mode (mode2), resources of UE1 are determined by UE1, and it is even more difficult to ensure that the transmission between UEs is continuous in the time domain.

Therefore, to ensure continuous occupation of the channel, the present application adopts the method of UE1 sending the first information on idle slots of the channel in the COT or the idle symbols in the slots, so as to ensure the continuous occupation of the channel in the COT shared by UE1 and facilitate the sharing of the COT information by UE2.

Based on the preceding description, the present application configures a position of the preset resource in each RB set of the resource pool to prevent the first information from interfering with transmission of other information and to save overheads. The position of the preset resource is configured for each RB set in the resource pool. Therefore, the position of the preset resource includes the frequency domain resource position of the first information, the position of the preset resource is applicable to all time domains, and the first information includes at least one of an occupied signal or an occupied channel.

FIG. 8 is a diagram of a position of the preset resource in each RB set of a resource pool according to an embodiment. As shown in FIG. 8, the resource pool includes two RB sets, namely, RB set0 and RB set1. A position of the preset resource of the first information is configured in each RB set, and the position of the preset resource is applicable to all time domains (that is, slot n, slot n + 1, slot n + 2, slot n + 3, slot n + 4, and the like).

In an embodiment, for each RB set, the position of the preset resource is indicated by a bitmap in the RB set.

In an example, the bitmap is in a one-to-one correspondence with RBs in the each RB set; 1 in the bitmap indicates that the RB is a position of the preset resource, and 0 in the bitmap indicates that the RB is not a position of the preset resource.

In another example, the bitmap is in a one-to-one correspondence with interleaving in the each RB set; 1 in the bitmap indicates that the interleaving is a position of the preset resource, and 0 in the bitmap indicates that the interleaving is not a position of the preset resource.

In the time domain, the position of the preset resource is usually on the symbol where the PSCCH/PSSCH is located in a slot, on the symbol where the PSFCH is located in a slot, or on the GAP symbol in a slot.

In S120, a first resource is determined, and the first resource includes candidate time domain resources and candidate RB sets that are used for sending the first information.

In an embodiment, the candidate time domain resources include at least one of the following resources in a channel occupancy time (COT) acquired by the first communication node through channel listening with a first channel access type: all slots, some slots, physical sidelink control channel (PSCCH) symbols in a slot, physical sidelink shared channel (PSSCH) symbols in a slot, physical sidelink feedback channel (PSFCH) symbols in a slot, or GAP symbols in a slot.

In an embodiment, the candidate RB sets include at least one RB set of a channel acquired by the first communication node through channel listening with at least one of a first channel access type or a second channel access type.

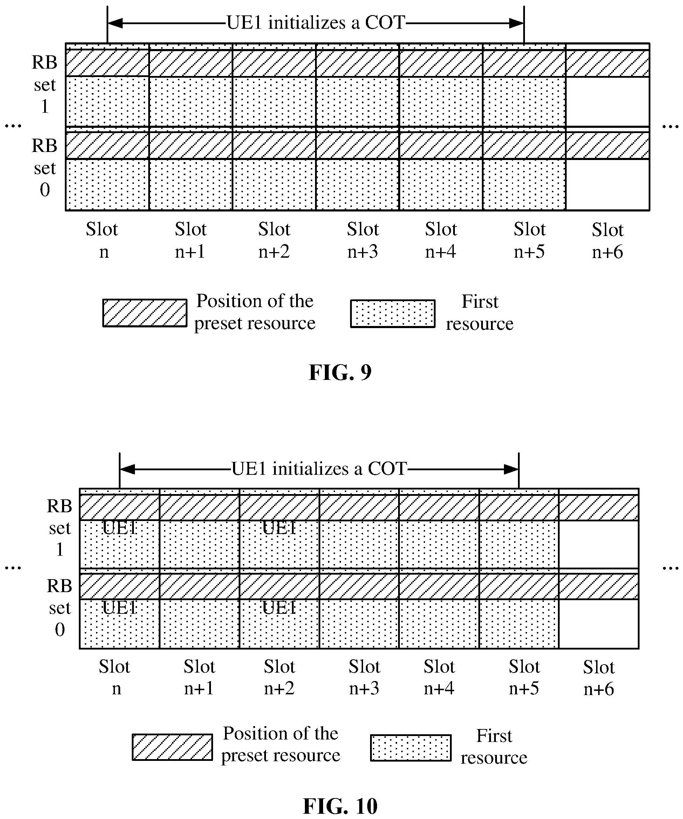

FIG. 9 is a diagram of a first resource according to an embodiment. As shown in FIG. 9, the COT acquired, by UE1, by performing channel listening using the first channel access type corresponds to 6 slots, and the channel acquired, by UE1, by performing channel listening using at least one of the first channel access type or the second channel access type corresponds to 2 RB sets; the 6 slots are slot n, slot n + 1, slot n + 2, slot n + 3, slot n + 4, and slot n + 5, and the 2 RB sets are RB set0 and RB set1. Assuming that the candidate time domain resources are all slots in the COT acquired, by UE1, by performing channel listening using the first channel access type, and the candidate RB sets are all RB sets of the channel acquired, by UE1, by performing channel listening using at least one of the first channel access type or the second channel access type, then in the time domain and frequency domain, the first resource corresponds to the 12 positions of the preset resources shown in FIG. 9, that is, the resources at the 12 positions of the preset resources shown in FIG. 9 may be used as candidate resources for sending the first information.

In S130, a second resource is determined according to the first resource, and the first information is sent at a position of the preset resource of the second resource.

In an embodiment, before sending the first information at the position of the preset resource of the second resource, UE1 may also perform channel listening using a second channel access type (type2).

The second resource may be understood as the entire set or subset of the first resource. In an embodiment, "determining the second resource according to the first resource" may include any one of the following two manners:
Manner 1: The determination manner of time domain first and then frequency domain is adopted.

In manner 1, the method of "determining the second resource according to the first resource" may include a1 and a2.

In a1, the time domain resource result of each RB set in the candidate RB sets is determined, where the time domain resource result includes a time domain resource in the candidate time domain resources in the each RB set in the candidate RB sets that needs to send the first information.

The first resource shown in FIG. 9 is used as an example. The candidate RB sets include RB set0 and RB set1, and the time domain resource results of RB set0 and RB set1 are determined in sequence. The time domain resource result of RB set0 includes a time domain resource that needs to send the first information among the candidate time domain resources in RB set0; the time domain resource result of RB set1 includes a time domain resource that needs to send the first information among the candidate time domain resources in RB set1.

In a2, the second resource is determined according to time domain resource results of all RB sets in the candidate RB sets.

In a2, according to the time domain resource results of all RB sets in the candidate RB sets, the rule for determining the second resource may be as follows: If the first communication node needs to receive third information at a target time domain position of any RB set among all the RB sets in the candidate RB sets, the first communication node does not send the first information at target time domain positions of all the RB sets in the candidate RB sets, and the third information includes at least one of an SL signal, an SL channel, an NR downlink signal, an NR downlink channel, an NR uplink signal, or an NR uplink channel.

The first resource shown in FIG. 9 is still used as an example. It is assumed that the time domain resource result of RB set0 includes slot n, slot n + 1, and slot n + 3, and the time domain resource result of RB set1 includes slot n and slot n + 1. If UE1 needs to receive the third information in slot n + 3 of RB set1, UE1 does not send the first information in the slots n + 3 of all RB sets. Therefore, based on the time domain resource results of RB set0 and the time domain resource result of RB set1, the finally determined second resources are slot n and slot n + 1 of RB set0 as well as slot n and slot n + 1 of RB set1. That is, UE1 sends the first information at the positions of the preset resources of slot n and slot n + 1 of RB set0 and slot n and slot n + 1 of RB set1.

In an embodiment, the time domain resource result meets at least one of the following five conditions.

Condition a1 is as follows: The time domain resource result does not include a third resource, the third resource is a resource for sending second information by the first communication node, and the second information includes at least one of an SL signal, an SL channel, an NR uplink signal, or an NR uplink channel.

The SL signal and the SL channel may include at least one of a PSCCH, a PSSCH, a PSFCH, a sidelink-synchronization signal block (S-SSB), or a channel state information-reference signal (CSI-RS). The NR uplink signal and the NR uplink channel may include a physical uplink shared channel (PUSCH), a physical uplink control channel (PUCCH), a sounding reference signal (SRS), a positioning reference signal (PRS), or a phase tracking reference signal (PTRS).

In an embodiment, the S-SSB may be an S-SS/physical sidelink broadcast channel (PSBCH) block.

Condition a2 is as follows: The time domain resource result does not include a fourth resource, the fourth resource is determined according to a detection result, and the fourth resource is a resource reserved by a second communication node in the first resource.

Based on condition a2, optionally, the detection result includes determining the reference signal received power (RSRP) of the demodulation reference signal (DMRS) on the PSCCH or PSSCH associated with the fourth resource; the RSRP of the DMRS on the PSCCH or PSSCH associated with the fourth resource is greater than or equal to a first preset threshold. That is, only when the RSRP of the DMRS on the PSCCH or the PSSCH associated with the fourth resource is greater than or equal to the first preset threshold, the time domain resource result does not include the fourth resource; otherwise, the time domain resource result may include the fourth resource.

Condition a3 is as follows: The time domain resource result does not include a fifth resource, the fifth resource is a resource corresponding to resource occupation information, and the resource occupation information is carried in feedback information sent by a second communication node on a feedback resource.

Based on condition a3, optionally, the RSRP on the feedback resource where the feedback information is located is greater than or equal to a second preset threshold. That is, only when the RSRP on the feedback resource where the feedback information is located is greater than or equal to the second preset threshold, the time domain resource result does not include the fifth resource; otherwise, the time domain resource result may include the fifth resource.

In an embodiment, the each RB set or each resource pool configures at least one of time domain information or frequency domain information of the feedback resource; the time domain information of the feedback resource includes at least one of a period N, offset within a period being k, or a symbol position in a slot; the feedback resource corresponds to a slot index after a slot where the feedback resource is located, and the corresponding relationship is determined according to a relative slot index and a position of the feedback resource in the slot; or the feedback resource corresponds to a candidate channel resource index after a slot where the feedback resource is located, and the corresponding relationship is determined according to a relative candidate channel resource time-frequency index and a position of the feedback resource in the slot.

The candidate channel may be a PSCCH/PSSCH channel.

Condition a4 is as follows: The time domain resource result does not include a sixth resource, the sixth resource is a resource on which the first communication node needs to receive third information on the second resource, and the third information includes at least one of an SL signal, an SL channel, an NR downlink signal, an NR downlink channel, an NR uplink signal, or an NR uplink channel.

Condition a5 is as follows: The time domain resource result does not include a seventh resource, and the seventh resource is all time domain resources after a time domain resource where a last valid transmission of the first communication node on the each RB set is located.

In an embodiment, the seventh resource is determined according to at least one of the following manners: determined by a detection result; determined by a sending resource selected by the first communication node; determined by feedback information of a second communication node; or determined by a sixth resource, where the sixth resource is a resource on which the first communication node needs to receive third information on the second resource, and the third information includes at least one of an SL signal, an SL channel, an NR downlink signal, an NR downlink channel, an NR uplink signal, or an NR uplink channel.

Manner 2: The determination manner of frequency domain first and then time domain is adopted.

In manner 2, the method of "determining the second resource according to the first resource" may include b1.

In b1, the frequency domain resource result of each time domain resource in the candidate time domain resources is determined, and the frequency domain resource result includes an RB set in the candidate RB sets on the each time domain resource that needs to send the first information.

The first resource shown in FIG. 9 is used as an example. The candidate time domain resources include 6 slots, namely slot n, slot n + 1, slot n + 2, slot n + 3, slot n + 4, and slot n + 5, and the frequency domain resource result of each time domain resource is determined in sequence. It is assumed that the frequency domain resource result of slot n includes RB set0, the frequency domain resource result of slot n+ 1 is empty, the frequency domain resource result of slot n + 2 is empty, the frequency domain resource result of slot n + 3 is empty, the frequency domain resource result of slot n + 4 includes RB set0, and the frequency domain resource result of slot n + 5 includes RB set1. Therefore, the finally determined second resources are RB set0 of slot n, RB set0 of slot n + 4, and RB set1 of slot n + 5. That is, the first information is sent at the position of the preset resources of RB set0 of slot n, RB set0 of slot n + 4, and RB set1 of slot n + 5.

In an embodiment, the frequency domain resource result meets at least one of the following four conditions.

Condition b1 is as follows: The frequency domain resource result does not include a third resource, the third resource is a resource for sending second information by the first communication node, and the second information includes at least one of an SL signal, an SL channel, an NR uplink signal, or an NR uplink channel.

The SL signal and the SL channel may include at least one of a PSCCH, a PSSCH, a PSFCH, an S-SSB, or a CSI-RS. The NR uplink signal and the NR uplink channel may include at least one of a PUSCH, a PUCCH, an SRS, a PRS, or a PTRS.

Condition b2 is as follows: The frequency domain resource result does not include a fourth resource, the fourth resource is determined according to a detection result, and the fourth resource is a resource reserved by a second communication node in the first resource.

Based on condition b2, optionally, the detection result includes determining the RSRP of the DMRS on the PSCCH or PSSCH associated with the fourth resource; the RSRP of the DMRS on the PSCCH or PSSCH associated with the fourth resource is greater than or equal to a first preset threshold. That is, only when the RSRP of the DMRS on the PSCCH or the PSSCH associated with the fourth resource is greater than or equal to the first preset threshold, the frequency domain resource result does not include the fourth resource; otherwise, the frequency domain resource result may include the fourth resource.

Condition b3 is as follows: The frequency domain resource result does not include a fifth resource, the fifth resource is a resource corresponding to resource occupation information, and the resource occupation information is carried in feedback information sent by a second communication node on a feedback resource.

Based on condition b3, optionally, the RSRP on the feedback resource where the feedback information is located is greater than or equal to a second preset threshold. That is, only when the RSRP on the feedback resource where the feedback information is located is greater than or equal to the second preset threshold, the frequency domain resource result does not include the fifth resource; otherwise, the frequency domain resource result may include the fifth resource.

In an embodiment, the each RB set or each resource pool configures at least one of time domain information or frequency domain information of the feedback resource; the time domain information of the feedback resource includes at least one of a period N, offset within a period being k, or a symbol position in a slot; the feedback resource corresponds to a slot index after a slot where the feedback resource is located, and the corresponding relationship is determined according to a relative slot index and a position of the feedback resource in the slot; or the feedback resource corresponds to a candidate channel resource index after a slot where the feedback resource is located, and the corresponding relationship is determined according to a relative candidate channel resource time-frequency index and a position of the feedback resource in the slot.

The candidate channel may be a PSCCH/PSSCH channel.

Condition b4 is as follows: The frequency domain resource result does not include a sixth resource, the sixth resource is a resource on which the first communication node needs to receive third information on the second resource, and the third information includes at least one of an SL signal, an SL channel, an NR downlink signal, an NR downlink channel, an NR uplink signal, or an NR uplink channel.

Some example embodiments are listed below to illustrate the five conditions satisfied by the time domain resource results in the preceding embodiments of the present application. The following example embodiments may be executed individually or in combination. In addition, the four conditions satisfied by the frequency domain resource results in the preceding embodiments of the present application are similar to those in the following embodiments and are not repeated herein for simplicity.

In a first example embodiment, FIG. 10 is a diagram of a time domain resource result according to an embodiment. As shown in FIG. 10, it is assumed that the COT acquired, by UE1, by performing channel listening using the first channel access type corresponds to 6 slots and the channel acquired, by UE1, by performing channel listening using at least one of the first channel access type or the second channel access type corresponds to 2 RB sets; the 6 slots are slot n, slot n + 1, slot n + 2, slot n + 3, slot n + 4, and slot n + 5, and the 2 RB sets are RB set0 and RB set1.

Since UE1 sends the second information on slot n and slot n + 2 of RB set0 and sends the second information on slot n and slot n + 2 of RB set1, UE1 sends, on RB set0, the first information on the positions of the preset resources of slot n + 1, slot n + 3, slot n + 4, and slot n + 5 of the six slots in the COT and does not need to send the first information on the positions of the preset resources of slot n and slot n + 2 to ensure the continuous occupation of the channel in the COT; similarly, UE1 sends, on RB set1, the first information on the positions of the preset resources of slot n + 1, slot n + 3, slot n + 4, and slot n + 5 of the six slots in the COT and does not need to send the first information on the positions of the preset resources of slot n and slot n + 2.

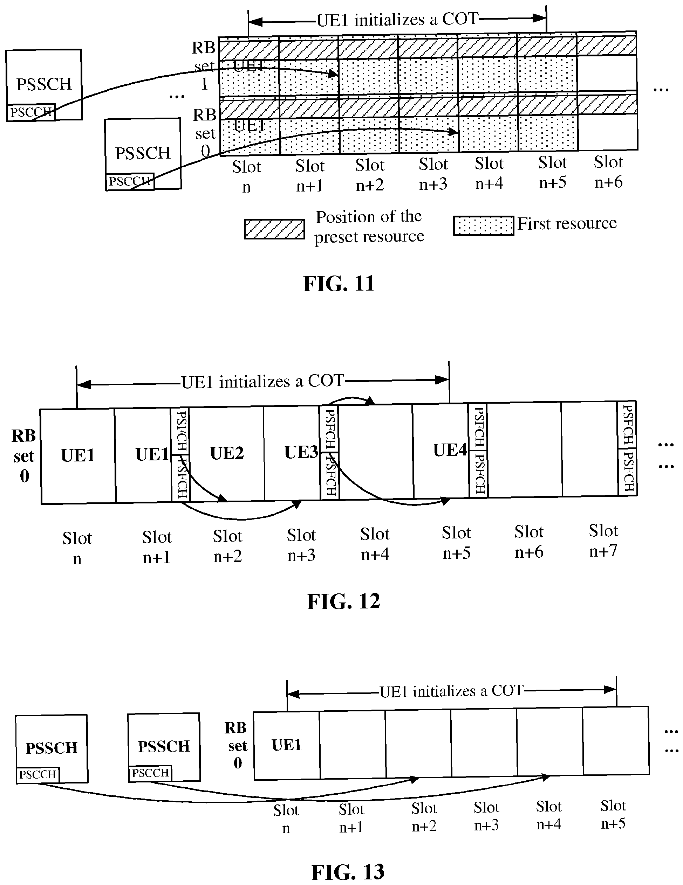

In a second example embodiment, FIG. 11 is a diagram of another time domain resource result according to an embodiment. As shown in FIG. 11, it is assumed that the COT acquired, by UE1, by performing channel listening using the first channel access type corresponds to 6 slots and the channel acquired, by UE1, by performing channel listening using at least one of the first channel access type or the second channel access type corresponds to 2 RB sets; the 6 slots are slot n, slot n + 1, slot n + 2, slot n + 3, slot n + 4, and slot n + 5, and the 2 RB sets are RB set0 and RB set1.

For RB set0, UE1 determines that UE2 has data transmission on slot n + 4 (that is, slot n + 4 is reserved by UE2) based on the detection result before an occasion n, and UE1 sends the second information on slot n of RB set0. For RB set1, UE1 determines that UE2 has data transmission on slot n + 2 (that is, slot n + 2 is reserved by UE2) based on the detection result before the occasion n, and UE1 sends the second information on slot n of RB set1.

Therefore, on RB set0, UE1 sends the first information at the positions of the preset resources of slot n + 1, slot n + 2, slot n + 3, and slot n + 5 of the six slots in the COT and does not need to send the first information at the positions of the preset resources of slot n and slot n + 4; similarly, on RB set1, UE1 sends the first information at the positions of the preset resources of slot n + 1, slot n + 3, slot n + 4, and slot n + 5 of the six slots in the COT and does not need to send the first information at the positions of the preset resources of slot n and slot n + 2.

If the RSRP of the DMRS on the PSCCH or PSSCH of slot n + 2 of RB set1 is less than the first preset threshold, then UE1 still needs to send the first information at the position of the preset resource of slot n + 2 of RB set1.

In a third example embodiment, FIG. 12 is a diagram of another time domain resource result according to an embodiment. As shown in FIG. 12, it is assumed that the period of the feedback resource PSFCH is 2, corresponding to 2 consecutive slots after the PSFCH.

After UE1 sends the COT sharing information, if three UE2s want to use the COT and these three UE2s are recorded as UE2a, UE2b, and UE2c, respectively, then UE2a, UE2b, and UE2c separately send feedback information on the feedback resources (such as PSFCH resources) corresponding to the slots. UE1 confirms that UEs transmit data on slot n + 2, slot n + 3, and slot n + 5 based on the received information on the PSFCH feedback resources on slot n + 1 and slot n + 3, then UE1 only needs to send the first information on the position of the preset resource of slot n + 4 in the COT and does not need to send the first information on the positions of the preset resources of slot n + 2, slot n + 3, and slot n + 5. Slot n and slot n + 1 do not need to send the first information because UE1 has sent the second information on these slots.

If the RSRP on the feedback resource where the feedback information corresponding to slot n + 2 is located is less than the second preset threshold, then UE1 still needs to send the first information at the position of the preset resource of slot n + 2.

In a fourth example embodiment, as shown in FIG. 10, it is assumed that the COT acquired, by UE1, by performing channel listening using the first channel access type corresponds to 6 slots and the channel acquired, by UE1, by performing channel listening using at least one of the first channel access type or the second channel access type corresponds to 2 RB sets; the 6 slots are slot n, slot n + 1, slot n + 2, slot n + 3, slot n + 4, and slot n + 5, and the 2 RB sets are RB set0 and RB set1.

Since UE1 sends the second information on slot n and slot n + 2 of RB set0 and receives the third information on slot n and slot n + 2 of RB set1, UE1 sends, on RB set0, the first information on the positions of the preset resources of slot n + 1, slot n + 3, slot n + 4, and slot n + 5 of the six slots in the COT and does not need to send the first information on the positions of the preset resources of slot n and slot n + 2 to ensure the continuous occupation of the channel in the COT; similarly, UE1 sends, on RB set1, the first information on the position of the preset resources of slot n + 1, slot n + 3, slot n + 4, and slot n + 5 of the six slots in the COT and does not need to send the first information on the position of the preset resources of slot n and slot n + 2.

In a fifth example embodiment, FIG. 13 is a diagram of another time domain resource result according to an embodiment. As shown in FIG. 13, UE1 successfully initializes a COT in slot n and sends the second information on slot n. Before slot n, it is determined that data transmission exists in slot n + 2 and slot n + 4 on the same RB set(s) as the second information occupies on the slot n. Then UE1 determines that slot 4 in the COT is the last slot for transmission, and UE1 sends the first information on the position of the preset resources of slot n + 1 and slot n + 3 and does not need to send the first information on the position of the preset resources of slot n + 2, slot n + 4, and slot n + 5. Since the second information is sent on slot n by UE1, it is not necessary to send the first information on slot n.

In the present application, after UE1 sends the first signal, in order not to affect the normal transmission of data by other UEs in the block that do not share the COT of UE1, it can be considered that the first information between UEs in the 3GPP system does not affect the LBT of the UE.

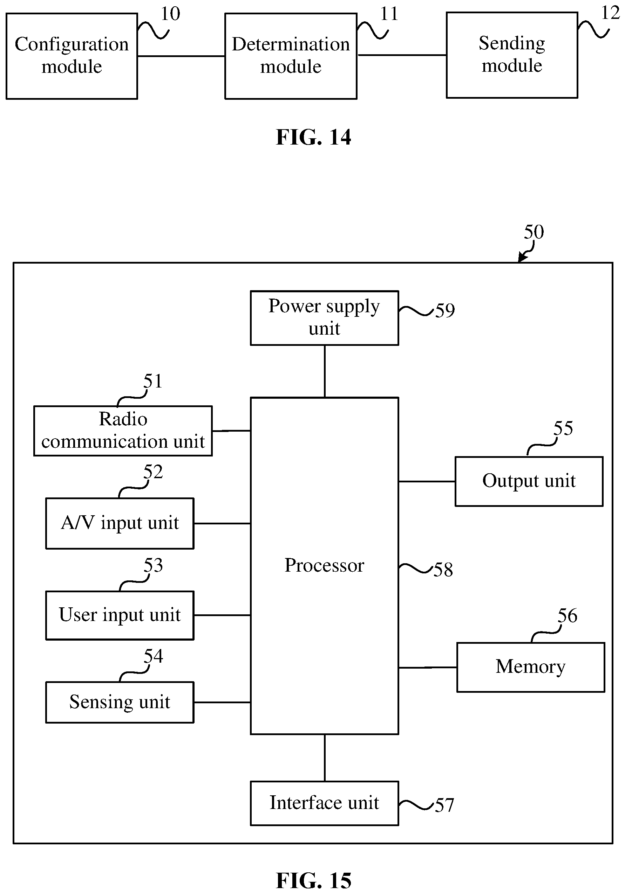

FIG. 14 is a diagram illustrating the structure of an information sending apparatus according to an embodiment. The apparatus may be configured in a communication node. As shown in FIG. 14, the apparatus includes a configuration module 10, a determination module 11, and a sending module 12.

The configuration module 10 is configured to configure a position of the preset resource in each resource block set (RB set) of a resource pool, the position of the preset resource includes a frequency domain resource position of first information, and the first information includes at least one of an occupied signal or an occupied channel. The determination module 11 is configured to determine a first resource, and the first resource includes candidate time domain resources and candidate RB sets that are used for sending the first information; the determination module 11 is also configured to determine a second resource based on the first resource. The sending module 12 is configured to send the first information at a position of the preset resource of the second resource.

The information sending apparatus provided in this embodiment is configured to perform the information sending method in the embodiment shown in FIG. 7. The implementation principles and technical effects of the information sending apparatus provided by this embodiment are similar to those of the preceding embodiments and are not repeated herein.

In an embodiment, the position of the preset resource is indicated by a bitmap; the bitmap is in a one-to-one correspondence with resource blocks (RBs) in the each RB set; or the bitmap is in a one-to-one correspondence with interleaving in the each RB set.

In an embodiment, the candidate time domain resources include at least one of the following resources in a channel occupancy time (COT) acquired by the first communication node through channel listening with a first channel access type: all slots, some slots, physical sidelink control channel (PSCCH) symbols in a slot, physical sidelink shared channel (PSSCH) symbols in a slot, physical sidelink feedback channel (PSFCH) symbols in a slot, or GAP symbols in a slot.

In an embodiment, the candidate RB sets include at least one RB set of a channel acquired by the first communication node through channel listening with at least one of a first channel access type or a second channel access type.

In an embodiment, the sending module 12 is also configured to, before sending the first information at the position of the preset resource of the second resource, perform channel listening using a second channel access type.

In an embodiment, the determination module 11 is configured to determine the time domain resource result of each RB set in the candidate RB sets, where the time domain resource result includes a time domain resource in the candidate time domain resources in the each RB set in the candidate RB sets that needs to send the first information; the determination module 11 is also configured to determine the second resource according to time domain resource results of all RB sets in the candidate RB sets.

In an embodiment, the determination module 11 is configured to determine the frequency domain resource result of each time domain resource in the candidate time domain resources, and the frequency domain resource result includes an RB set in the candidate RB sets on the each time domain resource that needs to send the first information.

In an embodiment, the time domain resource result or the frequency domain resource result does not include a third resource, the third resource is a resource for sending second information by the first communication node, and the second information includes at least one of a sidelink (SL) signal, an SL channel, a New Radio (NR) uplink signal, or an NR uplink channel.

In an embodiment, the time domain resource result or the frequency domain resource result does not include a fourth resource, the fourth resource is determined according to a detection result, and the fourth resource is a resource reserved by a second communication node in the first resource.

In an embodiment, the detection result includes determining the reference signal received power (RSRP) of the demodulation reference signal (DMRS) on the PSCCH or PSSCH associated with the fourth resource; the RSRP of the DMRS on the PSCCH or PSSCH associated with the fourth resource is greater than or equal to a first preset threshold.

In an embodiment, the time domain resource result or the frequency domain resource result does not include a fifth resource, the fifth resource is a resource corresponding to resource occupation information, and the resource occupation information is carried in feedback information sent by a second communication node on a feedback resource.

In an embodiment, the RSRP on the feedback resource where the feedback information is located is greater than or equal to a second preset threshold.

In an embodiment, the each RB set or each resource pool configures at least one of time domain information or frequency domain information of the feedback resource; the time domain information of the feedback resource includes at least one of a period N, offset within a period being k, or a symbol position in a slot; the feedback resource corresponds to a slot index after a slot where the feedback resource is located, and the corresponding relationship is determined according to a relative slot index and a position of the feedback resource in the slot; or the feedback resource corresponds to a candidate channel resource index after a slot where the feedback resource is located, and the corresponding relationship is determined according to a relative candidate channel resource time-frequency index and a position of the feedback resource in the slot.

In an embodiment, the time domain resource result or the frequency domain resource result does not include a sixth resource, the sixth resource is a resource on which the first communication node needs to receive third information on the second resource, and the third information includes at least one of an SL signal, an SL channel, an NR downlink signal, an NR downlink channel, an NR uplink signal, or an NR uplink channel.

In an embodiment, the time domain resource result does not include a seventh resource, and the seventh resource is all time domain resources after a time domain resource where a last valid transmission of the first communication node on the each RB set is located.

In an embodiment, the seventh resource is determined according to at least one of the following manners: determined by a detection result; determined by a sending resource selected by the first communication node; determined by feedback information of a second communication node; or determined by a sixth resource, where the sixth resource is a resource on which the first communication node needs to receive third information on the second resource, and the third information includes at least one of an SL signal, an SL channel, an NR downlink signal, an NR downlink channel, an NR uplink signal, or an NR uplink channel.

In an embodiment, the determination module 11 is configured to receive third information at a target time domain position of any RB set among all the RB sets in the candidate RB sets and is configured not to send the first information at target time domain positions of all the RB sets in the candidate RB sets, and the third information includes at least one of an SL signal, an SL channel, an NR downlink signal, an NR downlink channel, an NR uplink signal, or an NR uplink channel.

An embodiment of the present application also provides a communication node. The communication node includes a processor, which is configured to, when executing a computer program, perform the method provided in any embodiment of the present application. The communication node may be a terminal device provided in any embodiment of the present application, which is not limited in the present application.

Illustratively, the following embodiment provides a structural diagram where the communication node is a UE.

FIG. 15 is a diagram illustrating the structure of a UE according to an embodiment. The UE may be implemented in multiple forms. The UE in the present application may include but is not limited to, mobile terminal devices such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal, and a vehicle-mounted electronic rearview mirror and fixed terminal devices such as a digital television (TV) and a desktop computer.

As shown in FIG. 15, a UE 50 may include a radio communication unit 51, an audio/video (A/V) input unit 52, a user input unit 53, a sensing unit 54, an output unit 55, a memory 56, an interface unit 57, a processor 58, and a power supply unit 59. FIG. 15 illustrates the UE including multiple components; but it is to be understood that not all illustrated components are required to be implemented. More or fewer components may be implemented instead.

In this embodiment, the radio communication unit 51 allows radio communication between the UE 50 and a base station or a network. The A/V input unit 52 is configured to receive audio or video signals. The user input unit 53 may generate key input data according to commands input by a user to control various operations of the UE 50. The sensing unit 54 detects the current state of the UE 50, the position of the UE 50, the presence or absence of the user's touch input into the UE 50, the orientation of the UE 50, the acceleration or deceleration of the UE 50, the direction of the acceleration or deceleration, and the like and generates commands or signals for controlling the operations of the UE 50. The interface unit 57 serves as an interface through which at least one external apparatus can be connected to the UE 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the UE 50 may cooperate with a network storage apparatus that implements the storage function of the memory 56 through a network connection. The processor 58 is generally configured to control the overall operation of the UE 50. Under the control of the processor 58, the power supply unit 59 receives external power or internal power and provides appropriate power required for operating various elements and components.

The processor 58 executes the programs stored in the memory 56 to perform at least one function application and data processing, for example, to implement the method provided by the embodiments of the present application.

An embodiment of the present application also provides a computer-readable storage medium. The computer-readable storage medium is configured to store a computer program that, when executed by a processor, implements the method provided by any one of the embodiments of the present application.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared or semiconductor system, apparatus or device, or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EPROM), a flash memory, an optical fiber, a portable compact disk read-only memory (CD-ROM), an optical memory, a magnetic memory or any suitable combination thereof. In the present application, the computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, and radio frequency (RF), or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disk (CD)). Computer-readable media may include non-transitory storage media. The data processor may be of any type suitable to the local technical environment, such as, but is not limited to, a general purpose computer, a special purpose computer, a microprocessor, a digital signal processing (DSP), an application specific integrated circuit (ASIC), a field-programmable gate array (FPGA), and a processor based on a multi-core processor architecture.

## Claims

1. An information sending method, the method being applied to a first communication node and comprising:
configuring a position of a preset resource in each resource block set, RB set, of a resource pool, wherein the position of the preset resource comprises a frequency domain resource position of first information, and the first information comprises at least one of an occupied signal or an occupied channel;
determining a first resource, wherein the first resource comprises candidate time domain resources and candidate RB sets that are used for sending the first information; and
determining a second resource according to the first resource, and sending the first information at a position of the preset resource of the second resource.

2. The method of claim 1, wherein the position of the preset resource is indicated by a bitmap; and
the bitmap is in a one-to-one correspondence with resource blocks, RBs, in the each RB set; or the bitmap is in a one-to-one correspondence with interleaving in the each RB set.

3. The method of claim 1, wherein the candidate time domain resources comprise at least one of following resources in a channel occupancy time, COT, acquired, by the first communication node, by performing channel listening using a first channel access type:
all slots, some slots, physical sidelink control channel, PSCCH, symbols in a slot, physical sidelink shared channel, PSSCH, symbols in the slot, physical sidelink feedback channel, PSFCH, symbols in the slot, or GAP symbols in the slot.

4. The method of claim 1, wherein the candidate RB sets comprise at least one RB set of a channel acquired, by the first communication node, by performing channel listening using at least one of a first channel access type or a second channel access type.

5. The method of claim 1, before the sending the first information at the position of the preset resource of the second resource, further comprising:
performing channel listening using a second channel access type.

6. The method of claim 1, wherein the determining the second resource according to the first resource comprises:
determining a time domain resource result of each RB set in the candidate RB sets, wherein the time domain resource result comprises the time domain resource that needs to send the first information, and the time domain resource is in the candidate time domain resources in the each RB set in the candidate RB sets; and
determining the second resource according to time domain resource results of all RB sets in the candidate RB sets.

7. The method of claim 1, wherein determining the second resource according to the first resource comprises:
determining a frequency domain resource result of each time domain resource in the candidate time domain resources, wherein the frequency domain resource result comprises the RB set that needs to send the first information, and the RB set is in the candidate RB sets on the each time domain resource.

8. The method of claim 6 or 7, wherein the time domain resource result or the frequency domain resource result does not comprise a third resource, the third resource is a resource for sending second information by the first communication node, and the second information comprises at least one of a sidelink, SL, signal, an SL channel, a New Radio, NR, uplink signal, or an NR uplink channel.

9. The method of claim 6 or 7, wherein the time domain resource result or the frequency domain resource result does not comprise a fourth resource, the fourth resource is determined according to a detection result, and the fourth resource is a resource reserved by a second communication node in the first resource.

10. The method of claim 9, wherein the detection result comprises: determining reference signal received power, RSRP, of a demodulation reference signal, DMRS, on a PSCCH or a PSSCH associated with the fourth resource; and
the RSRP of the DMRS on the PSCCH or the PSSCH associated with the fourth resource being greater than or equal to a first preset threshold.

11. The method of claim 6 or 7, wherein the time domain resource result or the frequency domain resource result does not comprise a fifth resource, the fifth resource is a resource corresponding to resource occupation information, and the resource occupation information is carried in feedback information sent by a second communication node on a feedback resource.

12. The method of claim 11, wherein RSRP on the feedback resource where the feedback information is located is greater than or equal to a second preset threshold.

13. The method of claim 11, wherein the each RB set or each resource pool configures at least one of time domain information or frequency domain information of the feedback resource; the time domain information of the feedback resource comprises at least one of a period N, offset within a period being k, or a symbol position in a slot; and
the feedback resource corresponds to a slot index after a slot where the feedback resource is located, and a corresponding relationship is determined according to a relative slot index and a position of the feedback resource in the slot; or the feedback resource corresponds to a candidate channel resource index after a slot where the feedback resource is located, and a corresponding relationship is determined according to a relative candidate channel resource time-frequency index and a position of the feedback resource in the slot.

14. The method of claim 6 or 7, wherein the time domain resource result or the frequency domain resource result does not comprise a sixth resource, the sixth resource is a resource on which the first communication node needs to receive third information on the second resource, and the third information comprises at least one of an SL signal, an SL channel, an NR downlink signal, an NR downlink channel, an NR uplink signal, or an NR uplink channel.

15. The method of claim 6, wherein the time domain resource result does not comprise a seventh resource, and the seventh resource is all time domain resources after a time domain resource where a last valid transmission of the first communication node on the each RB set is located.

16. The method of claim 15, wherein the seventh resource is determined according to at least one of following manners:
determined by a detection result;
determined by a sending resource selected by the first communication node;
determined by feedback information of a second communication node; or
determined by a sixth resource, wherein the sixth resource is a resource on which the first communication node needs to receive third information on the second resource, and the third information comprises at least one of an SL signal, an SL channel, an NR downlink signal, an NR downlink channel, an NR uplink signal, or an NR uplink channel.

17. The method of claim 6, wherein determining the second resource according to the time domain resource results of all the RB sets in the candidate RB sets comprises the following:
the first communication node needs to receive third information at a target time domain position of an RB set among all the RB sets in the candidate RB sets, the first communication node does not send the first information at target time domain positions of all the RB sets in the candidate RB sets, and the third information comprises at least one of an SL signal, an SL channel, an NR downlink signal, an NR downlink channel, an NR uplink signal, or an NR uplink channel.

18. A communication node, comprising a processor that is configured to, when executing a computer program, implement the information sending method of any one of claims 1 to 17.

19. A computer-readable storage medium storing a computer program that, when executed by a processor, implements the information sending method of any one of claims 1 to 17.
